(19) Europäisches Patentamt
European Patent Office
Office européen des brevets

(11) Veröffentlichungsnummer: **0 075 250**
**A2**

# (12) EUROPÄISCHE PATENTANMELDUNG

(21) Anmeldenummer: **82108462.1**

(22) Anmeldetag: **14.09.82**

(51) Int. Cl.³: **C 11 D 7/14**, C 01 B 33/32

(30) Priorität: **17.09.81 DE 3136986**

(43) Veröffentlichungstag der Anmeldung: **30.03.83**
**Patentblatt 83/13**

(84) Benannte Vertragsstaaten: **AT BE DE FR GB IT NL SE**

(71) Anmelder: **HOECHST AKTIENGESELLSCHAFT,**
**Postfach 80 03 20, D-6230 Frankfurt/Main 80 (DE)**

(72) Erfinder: **Wirtz, Peter, Dr., Wiesbadener Strasse 135,**
**D-6240 Königstein/Taunus (DE)**
Erfinder: **Nöltner, Gerhard, Sossenheimer Weg 33a,**
**D-6230 Frankfurt am Main 80 (DE)**
Erfinder: **Mayer, Manfred, Dr., Königsberger Strasse 8,**
**D-6272 Niedernhausen/Taunus (DE)**
Erfinder: **Kandler, Joachim, Dr., Amselweg 10,**
**D-5042 Erftstadt (DE)**
Erfinder: **Nielen, Horst-Dieter, Dr., Giselherweg 1,**
**D-5050 Hürth (DE)**
Erfinder: **Westermann, Lothar, Ludwigsstrasse 8,**
**D-5000 Köln 90 (DE)**

## (54) Verfahren zur Herstellung eines granulierten Rohmaterials für Reinigungsmittel.

(57) Ein granuliertes Rohmaterial für Geschirrspüler-, Entfettungs- und Reinigungszubereitungen, das Natriummetasilikat in einer Form enthält, in der es gegen Kontakt mit Feuchtigkeit, $CO_2$, Tenside, chlorhaltige Bleichmittel und andere Bestandteile der endgültigen Zubereitung geschützt ist, wird aus pulverförmigem Natriummetasilikat mit einem Bruttoatomverhältnis $x = Na/Si$ von 2,1 bis 5,0 hergestellt. Dieses wird hierzu in einen Granulator eingefüllt, dort mit Wasser und $(x\text{-}2) \cdot \frac{1}{5}$ bis (x-2) Äquivalenten einer sauren Verbindung oder mit $\frac{(x\text{-}2)}{(y\text{-}1)} \cdot \frac{1}{10}$ bis $\frac{(x\text{-}2)}{(y\text{-}1)} \cdot \frac{1}{2}$ Formeleinheiten Wasserglas der Zusammensetzung $Na_2O \cdot ySiO_2$ pro Mol $SiO_2$ im Natriummetasilikat versetzt. Die Reaktionstemperatur beträgt 60-350°C.

EP 0 075 250 A2

ACTORUM AG

Verfahren zur Herstellung eines granulierten Rohmaterials für Reinigungsmittel

Die vorliegende Erfindung betrifft ein Verfahren zur Herstellung eines granulierten Rohmaterials für Reinigungsmittel auf Basis Natriummetasilikat. Dieses Rohmaterial ist beispielsweise einsetzbar für Geschirrspüler-, Entfettungs- und Reinigungszubereitungen und enthält das Natriummetasilikat in einer Form, in der es gegen Kontakt mit Feuchtigkeit, Kohlensäure der Luft, Tenside, chlorhaltige Bleichmittel und andere Bestandteile der endgültigen Zubereitung geschützt ist.

Aus der dänischen Patentschrift 50046 ist bekannt, daß sich aus Quarzsand und handelsüblicher Natronlauge bei 200 bis 300°C ein pulverförmiges Natriummetasilikat herstellen läßt, das noch freies Natriumhydroxid enthält (Chemisches Zentralblatt 1935 II, Seite 458). Anstelle von Natronlauge kann -wie später gefunden wurde- auch festes Natriumhydroxyd verwendet werden. Die Reaktion findet dann bei 320 bis 350° C statt. Das aufgeheizte Gemisch wird bei Erreichen des Schmelzpunktes von Ätznatron klumpig, aber zerfällt in dem Maße wieder zu einem feinen Staub, wie die Reaktion fortschreitet. Das angewandte Molverhältnis $x = NaOH/SiO_2$ beträgt im allgemeinen 2,1 bis 5, vorzugsweise 2,2 bis 2,8, insbesondere 2,3 bis 2,7. Das anfallende Natriummetasilikat ist teilweise hydratisiert und enthält (in Abhängigkeit von x) mehr oder weniger große Mengen an Natriumhydroxid.
Das erhaltene Produkt läßt sich als Reinigungsmittel verwenden oder in Reinigungsmittel einarbeiten. Allerdings weist es einige Nachteile auf, die eine breitere Anwendung verhindern. So ist es stark staubend und infolge seines Gehaltes an Natriumhydroxid stark hautreizend und hygroskopisch. Es enthält ferner harte, grobkörnige, wasserunlösliche Verunreinigungen, die $SiO_2$ enthalten und aus

nicht aufgeschlossenem Quarzsand und schwerlöslichem Natriumsilikat bestehen. Dieser Anteil ist umso größer, je geringer der verwendete Natriumhydroxidüberschuß, je gröber der eingesetzte Quarzsand und je niedriger die Umsetzungstemperatur gewählt wurde. Bezüglich der Verweilzeit existiert ein Optimum. In den meisten Fällen ist 0,1 bis 0,5 Gew.-% wasserunlöslicher Rückstand vorhanden. Dieser Rückstand schließt die Verwendung in Geschirrspülmitteln oder Waschmitteln aus.

Falls das genannte Natriummetasilikat bei der Formulierung von technischen Reinigern mit Substanzen vermischt wird, die Hydratwasser enthalten, wie zum Beispiel Natriummetasilikat-9-hydrat oder Trinatriumphosphat-12-hydrat, so kann es je nach den Mischungsverhältnissen durch Umhydratisierung zur Verhärtung oder Verklumpung des Reinigers kommen. Für die Formulierung von Geschirrspülern oder Waschmitteln läßt sich das genannte Metasilikat in der vorliegenden Form auch deshalb nicht einsetzen, weil die Stabilität optischer Aufheller oder oxidierender Zusätze (zum Beispiel Natriumperborat oder Dichlor-isocyanurat) in Gegenwart des freien Alkalis erheblich abnimmt.

Es bestand daher die Aufgabe ein Verfahren zu finden, mit dem sich pulverförmiges Natriummetasilikat, insbesondere das oben beschriebene technische Natriummetasilikat mit einem Gehalt an freiem Natriumhydroxid, in eine Form überführen läßt, die eine breitere, problemlose Anwendung ohne die aufgezeigten Nachteile ermöglicht.

Es wurde nun ein Verfahren zur Herstellung eines granulierten Rohmaterials gefunden, das für Geschirrspüler-, Entfettungs- und Reinigungszubereitungen geeignet ist und das Natriummetasilikat in einer Form enthält, in der es gegen Kontakt mit Feuchtigkeit, $CO_2$, Tenside, chlorhaltige Bleichmittel und andere Bestandteile der endgültigen Zubereitung geschützt ist. Das Verfahren ist dadurch gekennzeichnet, daß man ein pulverförmiges Natriummetasilikat mit einem Bruttoatomverhältnis x = Na/Si von 2,1 bis 5,0 in einen Granulator einfüllt, dort mit Wasser und $(x - 2)\cdot\frac{1}{5}$ bis (x - 2) Äquivalenten einer sauren Verbindung oder mit $\frac{(x-2)}{y-1}\cdot\frac{1}{10}$ bis $\frac{(x-2)}{y-1}\cdot\frac{1}{2}$ Formeleinheiten Wasserglas der Zusammensetzung $Na_2O\cdot y\ SiO_2$ pro Mol $SiO_2$ des Natriummetasilikats versetzt und man dabei eine Reaktionstemperatur von 60 - 350°C einhält. Bevorzugt wird das Wasser so zudosiert, daß die Reaktionsmischung stets in einem nahezu trockenen Zustand vorliegt.

Das beim erfindungsgemäßen Verfahren eingesetzte pulverförmige Natriummetasilikat wird bevorzugt nach dem Verfahren der dänischen Patentschrift 50046 hergestellt. Das Bruttoatomverhältnis x = Natrium/Silizium liegt vorzugsweise zwischen 2,2 und 4,0. Durch die erfindungsgemäße Umsetzung mit einer sauren Verbindung oder Wasserglas werden 20 bis 100 % des vorhandenen Natriumhydroxids neutralisiert und gleichzeitig wasserlösliche Natriumsalze gebildet.

Die Art der eingesetzten sauren Verbindung ist nicht kritisch, sondern richtet sich in der Hauptsache nach Kostenerwägungen. Zweckmäßigerweise verwendet man saure Verbindungen, deren Natriumsalze in bekannter Weise als Zusätze in Reinigerformulierungen verwendet werden und dort beispielsweise die Reinigungskraft verstärken oder als Streckmittel wirken. Es ist ferner bevorzugt, wenn bei der Neutralisation der sauren Verbindung mit dem überschüssigen Natriumhydroxid Natriumsalze entstehen, die unter den Bedingungen der Neutralisationsreaktion Kristallwasser enthalten. Bei dieser Ausführungsform entstehen Granulate, die besonders leicht wasserlöslich sind. Wäßrige Schwefelsäure oder wäßrige Lösungen oder Aufschlämmungen von Natriumbisulfat erzeugen Natriumsulfat, das als Streckmittel wirkt. Aus bestimmten sauren Verbindungen las-

sen sich Natriumsalze gewinnen, die die Reinigungskraft der fertigen Zubereitung erhöhen, also "Builder"-Wirkung haben, aber auch noch als Streckmittel angesehen werden können. Hierzu gehören zum Beispiel (wäßrige Lösungen oder Aufschlämmungen von) $NaH_2PO_4$ oder anderen sauren Phosphaten wie zum Beispiel $Na_2H_2P_2O_7$ sowie wäßrige Phosphorsäuren. Dabei entstehen Hydrate der Verbindungen $Na_2HPO_4$, $Na_3PO_4$ und $Na_4P_2O_7$. Eine wäßrige Aufschlämmung von Natriumbicarbonat wird in $Na_2CO_3 \cdot H_2O$ umgewandelt. Soda entsteht auch bei zusätzlicher Begasung mit $CO_2$ oder $CO_2$-haltiger Luft bei der Granulierung. Falls die Bildung von Soda unerwünscht ist, muß die Verwirbelung des Gutes sowie die Abführung des Wasserdampfes aus dem Granulat mittels eines Luftstromes unterbleiben; man bläst dann zur Verwirbelung ein $CO_2$-freies Gas, zum Beispiel Stickstoff ein. Besonders hoch ist der Gehalt an $CO_2$ in Verbrennungsgasen, die z.B. bei der Verbrennung von Heizöl anfallen. Auch solche Gase können beim erfindungsgemäßen Verfahren zur Granulierung eingesetzt werden, solange die Reaktionstemperatur im Bereich von 60 bis 350°C liegt. Besonders vorteilhaft ist, daß wegen der hohen Temperatur dieser Gase von z.B. 800°C eine gute Ausnutzung der thermischen Energie möglich ist.

Zu den sauren Verbindungen, von denen sich Natriumsalze mit Builder-Wirkung ableiten, zählen unter anderem Oxycarbonsäuren, wie zum Beispiel Zitronensäure (oder saure Zitrate), Weinsäure oder Gluconsäure. Bei Verwendung von Äthylendiamintetraessigsäure, Nitrilotriessigsäure oder aliphatischen Phosphonsäuren wird die fertige Zubereitung ein Komplexbildungsvermögen gegenüber mehrwertigen Kationen wie z.B. Kalzium und Magnesium, aufweisen.

Auch Wasserglas mit der Bruttoformel $Na_2O \cdot ySiO_2$, wobei y eine Zahl über 1, insbesondere über 2, vorzugsweise 2,7 bis 3,3 darstellt, läßt sich, in Wasser gelöst, als saure Verbindung einsetzen, da der nicht als Metasilikat gebundene $SiO_2$-Anteil ähnlich einer sauren Verbindung noch mit Natriumhydroxid zu Metasilikat zu reagieren vermag.

Bei vollständiger Neutralisation geschieht dies gemäß folgender Gleichung

$$Na_2SiO_3 + (x-2)\ NaOH + \frac{x-2}{2(y-1)}\ Na_2O \cdot (SiO_2)_y \longrightarrow$$

$$\frac{y(x-2)}{2(y-1)}\ Na_2SiO_3 + \frac{x-2}{2}\ H_2O$$

Auch wenn nur ein Teil des Natriumhydroxids des eingesetzten pulverförmigen Natriummetasilikats neutralisiert wird, fällt ein brauchbares Granulat an. Ein Granulat, das z.B.: - bezogen auf das Gewicht des eingesetzten Metasilikats - noch 10 Gew.-% freies NaOH enthält, zeigt bei Anwendung in wäßriger Lösung natürlich noch stark alkalische Reaktion.

Falls dies unerwünscht ist, so werden bei der Granulierung stöchiometrische Mengen der jeweils gewählten sauren Verbindungen eingesetzt, um eine Neutralisation des überschüssigen NaOH-Anteils zu erreichen. Auch unter diesen Bedingungen lassen sich einwandfreie Granulate produzieren. Dabei ist es überraschend, daß es bei der Reaktion mit Säure nicht auch partiell zur Bildung von freier Kieselsäure und damit unlöslichen Silikatanteilen kommt.
Die erhaltenen Granulate sind abriebfest, staubfrei, nicht hygroskopisch, backen beim Lagern nicht zusammen, zeigen verminderte Alkalität und sind daher gegenüber oxidierenden Waschmittelzusätzen sehr beständig.
Sie lösen sich rascher in Wasser auf als ein Metasilikat, das aus wäßriger Lösung durch Eindampfen und Trocknung gewonnen wurde. Die rasche Auflösung beruht möglicherweise auf der Gegenwart von Produkten, die Hydratwasser enthalten.

Als Granulator können bekannte Granulier-Einrichtungen, wie z.B. Drehrohr, Trommeltrockner und Granulierteller, eingesetzt werden. Sie sollen eine Aufgabe von Wasser und der sauren Verbindung, die Abführung von entstandenem Wasserdampf, eine Bewegung des Granuliergutes sowie eine Beheizung (z.B. durch Heißgaszufuhr) erlauben. Mann kann auch die Zugabe des Wassers, bzw. der Granulierflüssigkeit und die Trocknung räumlich voneinander trennen, d.h. in zwei verschiedenen Apparaturen durchführen. Bevorzugt ist die Verwendung eines Wirbelbettgranulators, insbesondere eines Wirbelschichtsprühgranulators. Die Größe der erhaltenen Granulate kann leicht durch die Zugabe der wäßrigen Suspension oder Lösung gesteuert werden. Die Zugabe von Wasser

oder der wäßrigen Lösung dauert etwa 15 - 30 Minuten. Sofort nach Beginn der Zugabe werden Agglomerate gebildet. Diese sind zuerst fein und wachsen ständig weiter.

Die Granulate werden umso feiner und gleichmäßiger, je feiner die Granulierflüssigkeit durch Düsen versprüht wird, je langsamer die Flüssigkeit auf das Granuliergut gesprüht wird und je dünnflüssiger die Granulierflüssigkeit ist. Beim Arbeiten mit einer Einstoffdüse führt höherer Sprühdruck zu einem feineren Sprühbild. In einer Zweistoff- oder Mehrstoffdüse gilt dies für höheren Druck der Sprühluft. Die Granulate werden umso feiner, je trockener die Atmosphäre im Produktraum gehalten wird, d.h. je rascher der entstehende Wasserdampf durch zugesetzte trockene Wirbelluft ausgetragen wird. Im allgemeinen liegt der mittlere Korndurchmesser des erhaltenen Granulats unter 1 mm. Die Zugabe von Wasser und der sauren Verbindung kann so erfolgen, daß eine wäßrige Lösung oder Suspension der sauren Verbindung auf das Granulat versprüht wird. Es ist aber auch möglich, gleichzeitig eine feste saure Substanz und Wasser aufzugeben. Dies ist besonders interessant, wenn die saure Verbindung nicht sehr gut wasserlöslich ist, da in diesem Fall die Menge des zu verdampfenden Wasseranteils nicht unnötig vergrößert wird. Die Menge an Wasser die zugegeben werden muß, beträgt im allgemeinen 5 - 50 Gew.-%, vorzugsweise 5 - 15 %. Mit geringeren Mengen lassen sich manchmal keine richtigen Granulate erzeugen.

Die im Granulator befindliche Reaktionsmischung sollte stets in einem nahezu trockenen Zustand vorliegen. Wenn die Granulierungsflüssigkeit schneller aufgegeben wird, als sie eingebaut wird oder verdampft, so kommt es zur Ausbildung von grobkörnigem, perl- bis murmelgroßen Granulaten. Es ist auch möglich von feuchtem Silikat auszugehen. Die dabei anfallenden Produkte sind jedoch gegenüber chlorabspaltenden Substanzen weniger verträglich.

Die Granulierung kann im Prinzip kontinuierlich, wegen der geringeren Investitionskosten für die Apparatur vorzugsweise aber diskontinuierlich, durchgeführt werden. Es ist bevorzugt, das pulverförmige Natriummetasilikat unmittelbar nach seiner Herstellung, d.h. gegebenenfalls noch in heißem Zustand, in den Granulator einzuführen und erfindungsgemäß weiterzuverarbeiten. Falls man z.B. das eingesetzte Metasilikat nach dem Verfahren der dänischen Patentschrift 50046 gewinnt, kann man das Produkt mit seiner Herstellungstemperatur von 250 - 350°C in den Granulator einfüllen und die Granulation beginnen.

Verfahrenstechnisch ist das erfindungsgemäße Verfahren vorteilhaft, weil es nur kurze Verweilzeit benötigt, d.h. hohe Raum-Zeit-Ausbeuten erlaubt und kein vorgranuliertes Ausgangsmaterial benötigt. Wirtschaftlich ist interessant, daß das eingesetzte Metasilikat-Pulver bei wesentlich niedrigerer Temperatur hergestellt werden kann als das übliche Metasilikat ohne Hydroxidanteil, das beispielsweise beim Aufschluß von Quarz mit Soda bei Temperaturen oberhalb 800°C anfällt.

Das erfindungsgemäß hergestellte Produkt eignet sich sehr gut als Rohmaterial für Geschirrspüler-, Entfettungs- und Reinigungszubereitungen aber auch als Metallreiniger in der Technik oder in der lebensmittelverarbeitenden Industrie. Auch bei Kontakt mit Substanzen, die viel Hydratwasser enthalten, mit feuchter Luft oder bei Aufdüsen von Tensidlösungen kommt es nicht zu nachträglichem Verbacken. Beim Zumischen chlorhaltiger Bleichmittel ist hohe Lagerstabilität gewährleistet.

Eine weitere Ausdehnung der Einsatzmöglichkeiten des erfindungsgemäß hergestellten Granulats ergibt sich, wenn man das Granulat mit einer Schicht aus Natriumtripolyphosphat überzieht.

Zu diesem Zweck wird also auf das granulierte, Natriummetasilikat enthaltende Rohmaterial ein Gemisch Natriumtripolyphosphat/Wasser bei erhöhter Temperatur aufgegeben, dabei ein Gewichtsverhältnis Natriumtripolyphosphat:granuliertes Rohmaterial 3:1 bis 1:3 eingehalten und gleichzeitig der entstehende Wasserdampf abgezogen. Als Gemisch von Natriumtripolyphosphat/Wasser kann eine gesättigte Lösung von Tripolyphosphat in Wasser eingesetzt werden, noch besser aber eine wäßrige Suspension von Tripolyphosphat. Ebenso kann man auch pulverförmiges Tripolyphosphat und Wasser an verschiedenen Stellen auf das Granulat aufgeben. Die in dieser Stufe zugegebene Wassermenge beträgt meist 5 - 15 Gew.-%. Je geringer sie ist, umso weniger Energie wird für die Verdampfung benötigt. Es muß nicht das gesamte zugegebene Wasser verdampft werden, da ein Teil als Kristallwasser unter Bildung von $Na_5P_3O_{10} \cdot 6H_2O$ gebunden wird. Der Wassergehalt des so beschichteten Granulats beträgt ca. 2 - 15, vorzugsweise 3 bis 5 Gew.-%.

Natriumtripolyphosphat-Lösung oder -Suspension, bzw. das Wasser, werden am besten aufgedüst. Auch die Beschichtung mit Natriumtripolyphosphat findet in einem Granulator unter dauernder Durchmischung statt. Dabei werden an die Apparatur die gleichen Anforderungen gestellt, wie in der vorgeschalteten Stufe der Metasilikatgranulierung. Die Verwendung eines Wirbelbettgranulators ist auch hier bevorzugt. Es ist möglich Granulierung und Beschichtung in zwei verschiedenen Granulatoren oder in einem einzigen Granulator durchzuführen. Am besten ist es im gleichen Apparat die beiden Schritte unmittelbar nacheinander auszuführen.

An Stelle von Natriumtripolyphosphat kann man ebensogut Kaliumtripolyphosphat einsetzen. Dieses Ausgangsprodukt ist jedoch wesentlich teurer.

Ein granuliertes Rohmaterial mit Alkalisilikat-Kern und einer Tripolyphosphat-Beschichtung ist bereits aus der DE-AS 28 22 765 bekanntgeworden. Die dabei eingesetzten Alkalisilikate weisen jedoch kein freies Alkalimetallhydroxid auf, so daß eine Neutralisation mit sauren Verbindungen nicht erforderlich ist.
Die Temperatur bei der Beschichtung des Metasilikat-Granulats mit Polyphosphat beträgt im allgemeinen 20 - 100°C.

Bei Temperaturen um 100°C kann die Beschichtung rasch erfolgen, da Wasser rasch verdampft. Es kommt jedoch bereits zu einer merklichen Hydrolyse des Polyphosphats der Formel $Na_5P_3O_{10}$, insbesondere bei hohem Wasseranteil. Bei Temperaturen um 20°C spielt die Hydrolyse keine Rolle, jedoch geht die Wasserverdampfung sehr langsam vor sich. Bevorzugt sind daher Temperaturen von 40 bis 90°C, insbesondere 60 bis 80°C. Auch bei diesem Verfahrensschritt soll die Zugabe von Granulierflüssigkeit (Wasser oder wäßrige Lösung von Tripolyphosphat) nur so langsam aufgegeben werden, daß das Granuliergut stets in einem nahezu trockenen Zustand vorliegt. Vorzugsweise liegt das angewandte Gewichtsverhältnis Natriumtripolyphosphat/granuliertes Rohmaterial im Bereich von 1,5:1 bis 1:1,5.
Die erhaltenen Granulate mit Polyphosphat-Beschichtung sind ebenfalls staubfrei, gut rieselfähig und mechanisch stabil. Sie backen nicht zusammen und weisen eine gute Saugfähigkeit gegenüber Tensiden auf und besitzen ein enges Kornspektrum.

Durch die erfindungsgemäße Kombination von Granulierung in Gegenwart einer sauren Verbindung und Beschichtung mit Natriumtripolyphosphat entsteht ein sehr flexibles Verfahren, mit dem eine Vielzahl von Granulaten hergestellt werden können. Die Variationsmöglichkeiten ergeben sich durch die Art und die Menge der sauren Verbindung, das Gewichts-

Verhältnis Granulat/Natriumtripolyphosphat und die Wahl der Reaktionsbedingungen (Wassermenge, Bettemperatur bei der Granulierung, Dosiergeschwindigkeit) durch die der Kristallwassergehalt beeinflußt werden kann. So lassen sich Granulate herstellen, die zur Formulierung von technischen Reinigern oder von Haushalts-Geschirrspülmitteln verwendet werden. Granulate für technische Reiniger enthalten vorzugsweise 10 bis 30 Gew.-% Natriumtripolyphosphat und einen hohen Anteil an freiem, d.h. nicht neutralisiertem, Natriumhydroxid oder Soda. Granulate für Haushalts-Geschirrspülmittel enthalten vorzugsweise 45 - 55 Gew.-% Natriumtripolyphosphat und keine oder nur geringe Anteile an freiem Natriumhydroxid.

Das erfindungsgemäße Verfahren und eine hierfür benutzbare Vorrichtung werden anhand der Figur näher erläutert.

Natriummetasilicat wird in pulvriger Form auf den horizontalen Lochboden (2) des Wirbelschichtgranulators (1) aufgebracht und zu einem Wirbelbett aufgewirbelt. Die hierzu benutzte Wirbelluft wird über Leitung (3) unterhalb des Lochbodens (2) in den Granulator eingeleitet. Gleichzeitig wird durch eine oder durch mehrere Zweistoffdüsen (4), die von oben, von der Seite oder von unten in den Granulator (1) hineinragen, eine wässrige Lösung oder Suspension einer sauren Verbindung eingesprüht. Über Leitung (5) wird die Lösung der sauren Substanz, über Leitung (6) Preßluft den Zweistoffdüsen zugeführt.

Die Wirbelluft tritt mit 100 bis 380°C in den Granulator (1) ein. Durch die Verdampfung des mit der Lösung in das Wirbelbett (7) eingesprühten Wassers sinkt die Temperatur der Wirbelluft, sobald sie in Kontakt mit dem Wirbelbett kommt. Durch geeignete Einstellung der Menge an eingesprühter Lösung pro Zeiteinheit läßt sich die Temperatur der

Wirbelluft oberhalb des Lochbodens (2) und damit die Temperatur des Wirbelbetts auf 50 bis 300°C einstellen.

Das in (1) hergestellte Granulat wird durch eine Saugförderung oder Bodenklappe (nicht gezeichnet) ausgetragen und dann in einer getrennten Anlage gesiebt. Die zu grobe Fraktion wird in einer Mühle zerkleinert und anschließend mit der zu kleinen Fraktion zurück in (1) gebracht und zusammen mit der nächsten Charge mit Metasilicat granuliert.

Die Abluft des Granulators (1) wird mittels Ventilator (8) aus (1) abgesaugt und über Leitung (10) entfernt. Mit Hilfe des beweglich angeordneten Filters (9) wird der mitgerissene Staub abgeschieden. Er fällt in die Wirbelschicht (7) zurück, wo er granuliert wird.

Die gleiche Vorrichtung eignet sich auch zum Beschichten von granuliertem Metasilicat mit Natriumpolyphosphat.

Die folgenden Beispiele (mit Ausnahme von Beispiel 5) wurden ausgeführt in einen Wirbelschicht-Sprühgranulator, Typ WSG 15, der Firma Glatt (Binzen/Lörrach).

Beispiel 1

Auf dem Lochboden (2) des oben beschriebenen Wirbelschichtsprühgranulators werden 14 kg Natriummetasilicat-Pulver vorgelegt (Bruttoatomverhältnis X = Natrium/Silicium = 2,4). Von unten werden durch den Lochboden 600 $m^3/h$ Luft mit einer Temperatur von 105°C und einem Wassergehalt von 7 g/kg eingeleitet.

Gleichzeitig wird über eine zentrisch angeordnete Düse (4) 3,22 l einer 50 gew.-%igen Natriumdihydrogenphosphat-Lösung eingesprüht. Die Düse arbeitet mit Preßluft von 1,5 bar.

Durch die Wasserverdampfung stellt sich eine Produkttemperatur von 82°C ein, die bei Beendigung der Zugabe der Lösung auf 100°C ansteigt. Arbeitszeit 15 bis 30 Minuten.

Das gebildete Granulat mit einem Schüttgewicht von 1,088 kg/$dm^3$ und einer Restfeuchte von 1 Gew.-% wird chargenweise ausgetragen und in einer Siebvorrichtung klassiert. 90 Gew.-% sind kleiner als 1mm, 10 Gew.-% sind kleiner als 0,2 mm. Der unbedeutende Feinanteil unter 0,1 mm und der Grobanteil über 1 mm werden (letzterer nach Passieren einer Zerkleinerungsvorrichtung) in den Granulator in Düsennähe zurückgeführt. Ebenso verfährt man mit dem Staubanteil, der aus der Abluft in einem Filter abgeschieden wird.

Beispiel 2

Beispiel 1 wird wiederholt, jedoch erfolgt die Granulierung mit Hilfe einer wässrigen Natriumhydrogensulfatlösung. Die Versuchsparameter sind der Tabelle 1 zu entnehmen.

Beispiel 3

Das Beispiel 1 wird wiederholt, jedoch erfolgt die Granulierung mit Hilfe einer wässrigen Natriumhydrogencarbonat-Lösung. Die Versuchsparameter sind der Tabelle 1 zu entnehmen.

Beispiel 4

In dem Wirbelschichtgranulator von Beispiel 1 werden 20 kg pulverförmiges Natriummetasilicat vorgelegt (x = 2,4) und bei einer Zulufttemperatur von 115 bis 146°C auf eine Produkttemperatur von 80 bis 90°C gebracht. Bei dieser Temperatur werden durch eine Zweistoff-Düse bei einem Sprühluftdruck von 1,5 bis 1,8 bar 4 kg einer 50 %igen Wasserglaslösung ($y = SiO_2/Na_2O = 3,3$) von unten in das Wirbelbett eingesprüht. Nach 15 bis 30 Minuten ist die Lösung aufgesprüht und das vorgelegt Produkt granuliert. Man erhält einen Granulat, bei dem die Nutzfraktion von 0,2 bis 1,6 mm über 90 Gew.-% ausmacht. Das Schüttgewicht liegt bei 1,0 bis 1,1 kg/l.

Beispiel 5

Das in den Beispielen 1 bis 3 hergestellte Granulat wird in einer Laboranlage diskontinuierlich mit Natriumpolyphosphat beschichtet. Die Versuchsparameter und Ergebnisse sind der Tabelle 2 zu entnehmen.

Beispiel 6

Von dem in Beispiel 1 hergestellten Produkt werden 8 kg in der gleichen Apparatur wie in Beispiel 1 weiterbehandelt mit Natriumpolyphosphatlösung. Einsatz: 250 $m^3$/h Wirbelluft von 150°C sowie 17 kg einer 20 gew.-%igen Natriumpolyphosphatlösung. Versuchsdauer 9 Stunden. Ablufttemperatur 90 bis 98°C. Das Gewichtsverhältnis Metasilicat/Polyphosphat betrug 7:3.

Beispiel 7

Von dem in Beispiel 1 hergestellten Produkt werden 2,6 kg in der gleichen Apparatur wie in Beispiel 1 weiterbehandelt durch Zugabe von 12 kg trockenem, feinem Natriumtripolyphosphat sowie 7 kg einer 20 Gew.-%-igen Natriumpolyphosphatlösung. Einsatz: 250 $m^3$/Stunde Wirbelluft von 150°C. Versuchsdauer 1 Stunde. Ablufttemperatur 30 - 70°C. Das Gewichtsverhältnis Metasilicat/Polyphosphat betrug 1 : 5.

Beispiel 8

Von dem in Beispiel 1 hergestellten Produkt werden 4,38 kg in der gleichen Apparatur wie in Beispiel 1 weiterbehandelt mit 10,5 kg trockenem, feinem Natriumtripolyphosphat sowie 6 kg einer 20 Gew.-%-igen Natriumpolyphosphatlösung. Einsatz: 250 $m^3$/Stunde Wirbelluft von 150°C. Versuchsdauer 6 Stunden. Ablufttemperatur 30 - 70 °C. Das Gewichtsverhältnis Metasilicat/Polyphosphat betrug 1 : 2,7.

Beispiel 9

Von dem in Beispiel 1 hergestellten Produkt werden 14,7 kg in der gleichen Apparatur wie in Beispiel 1 weiterbehandelt mit 7,4 kg trockenem, feinem Natriumtripolyphosphat sowie

5 kg einer 20 Gew.-%-igen Natriumpolyphosphatlösung. Versuchsdauer 1 Stunde. Ablufttemperatur 30 bis 70°C. Das Gewichtsverhältnis Metasilicat/Polyphosphat betrug 1,75:1.

Tabelle 1

Granulierung mit wässrigen Lösungen saurer Verbindungen

| Beispiel | | 1 | 2 | 3 |
|---|---|---|---|---|
| 1 Wirbelluft-Temp. | °C | 90 - 105 | 113 - 120 | 118 - 140 |
| 2 Bett -Temp. | °C | 82 - 100 | 81 - 93 | 90 - 99 |
| 3 Abluft - Temp. | °C | 24 - 32 | 25 - 28 | 25 - 27 |
| 4 Sprühluftdruck | bar | 1,5 | 1,5 | 1,5 |
| 5 Vorlage i. Bett | kg | 14 | 14 | 14 |
| 6 Wirbelluftmenge | ca. $m^3/h$ | 500 - 600 | 400 - 500 | 400 - 500 |
| 7 Menge und Art der Lösung d. sauren Verbindung | | 3,22 l<br>50%ige $NaH_2PO_4$-Lösung | 3,22 l<br>30%ige Na-bisulfat-Lösung | 9,66 l<br>10 %ige Na-bicarbonat-Lösung |
| 8 Versuchsdauer | min | 15 - 30 | 15 - 20 | 85 - 120 |

Tabelle 2

Behandlung von Metasilikat-Granulat mit Polyphosphat-Lösung

| Einsatzprodukt | | von Beispiel 1 | | | von Beispiel 2 | | | von Beispiel 3 | | |
|---|---|---|---|---|---|---|---|---|---|---|
| Gew.-Verhältnis Metasilikat-Granulat zu Tripolyphosphat | %/% | 30/70 | 50/50 | 70/30 | 30/70 | 50/50 | 70/30 | 30/70 | 50/50 | 70/30 |
| Wirbelluft-Temp. | °C | 122-130 | 118-130 | 120-125 | 125-135 | 110-130 | 120-140 | 120-130 | 118-130 | 120 |
| Abluft - Temp. | °C | 47-69 | 49-68 | 54-60 | 45-62 | 42-56 | 58-60 | 38-50 | 49-68 | 53-62 |
| Sprühluftdruck | bar | 1 | 1 | 2 | 1 | 1 | 2 | 1 | 1 | 2 |
| Vorlage i.Bett | kg | 1 | 1 | 2,32 | 1 | 1 | 1,6 | 1 | 1 | 2 |
| Wirbelluftmenge | ca. $m^3$/h | 30-55 | 30-40 | 30-40 | 20-45 | 20-30 | 30-60 | 25-45 | 30-45 | 8-30 |
| Menge Polyphosphat-Lösung | kg | 10 | 4,43 | 3,31 | 10 | 4,43 | 2,3 | 10 | 4,43 | 3,7 |
| Konzentration Polyphosphat-Lösung | | 23%ig | 23%ig | 30%ig | 23%ig | 23%ig | 30%ig | 23%ig | 23%ig | 23%ig |
| Temper.d.Lösung | °C | 60-68 | 55-75 | 50-60 | 64-75 | 54-70 | 50-60 | 60-77 | 55-70 | 55 |
| Versuchsdauer | h | 19 | 6:20 | 2:45 | 6:15 | 7:30 | 2:30 | 15:30 | 10:40 | 3 |

Patentansprüche:

1. Verfahren zur Herstellung eines granulierten Rohmaterials für Geschirrspüler-, Entfettungs- und Reinigungszubereitungen, das Natriummetasilikat in einer Form enthält, in der es gegen Kontakt mit Feuchtigkeit, $CO_2$, Tenside, chlorhaltige Bleichmittel und andere Bestandteile der endgültigen Zubereitung geschützt ist,
dadurch gekennzeichnet, daß man ein pulverförmiges Natriummetasilikat mit einem Bruttoatomverhältnis $x = Na/Si$ von 2,1 bis 5,0 in einen Granulator einfüllt, dort mit Wasser und $(x-2)\cdot\frac{1}{5}$ bis $(x-2)$ Äquivalenten einer sauren Verbindung oder mit $\frac{(x-2)}{(y-1)}\cdot\frac{1}{10}$ bis $\frac{(x-2)}{(y-1)}\cdot\frac{1}{2}$ Formeleinheiten Wasserglas der Zusammensetzung $Na_2O \cdot ySiO_2$ pro Mol $SiO_2$ im Natriummetasilikat versetzt und man dabei eine Reaktionstemperatur von 60 - 350°C einhält.

2. Verfahren nach Anspruch 1, dadurch gekennzeichnet, daß man auf das entstandene granulierte Rohmaterial ein Gemisch Natriumtripolyphosphat/Wasser bei erhöhter Temperatur aufbringt, dabei ein Gewichtsverhältnis Natriumtripolyphosphat:granuliertes Rohmaterial von 3:1 bis 1:3 einhält und gleichzeitig den entstehenden Wasserdampf abzieht.

3. Verfahren nach Anspruch 1, dadurch gekennzeichnet, daß man das Wasser so zudosiert, daß die Reaktionsmischung stets in einem nahezu trockenen Zustand vorliegt.

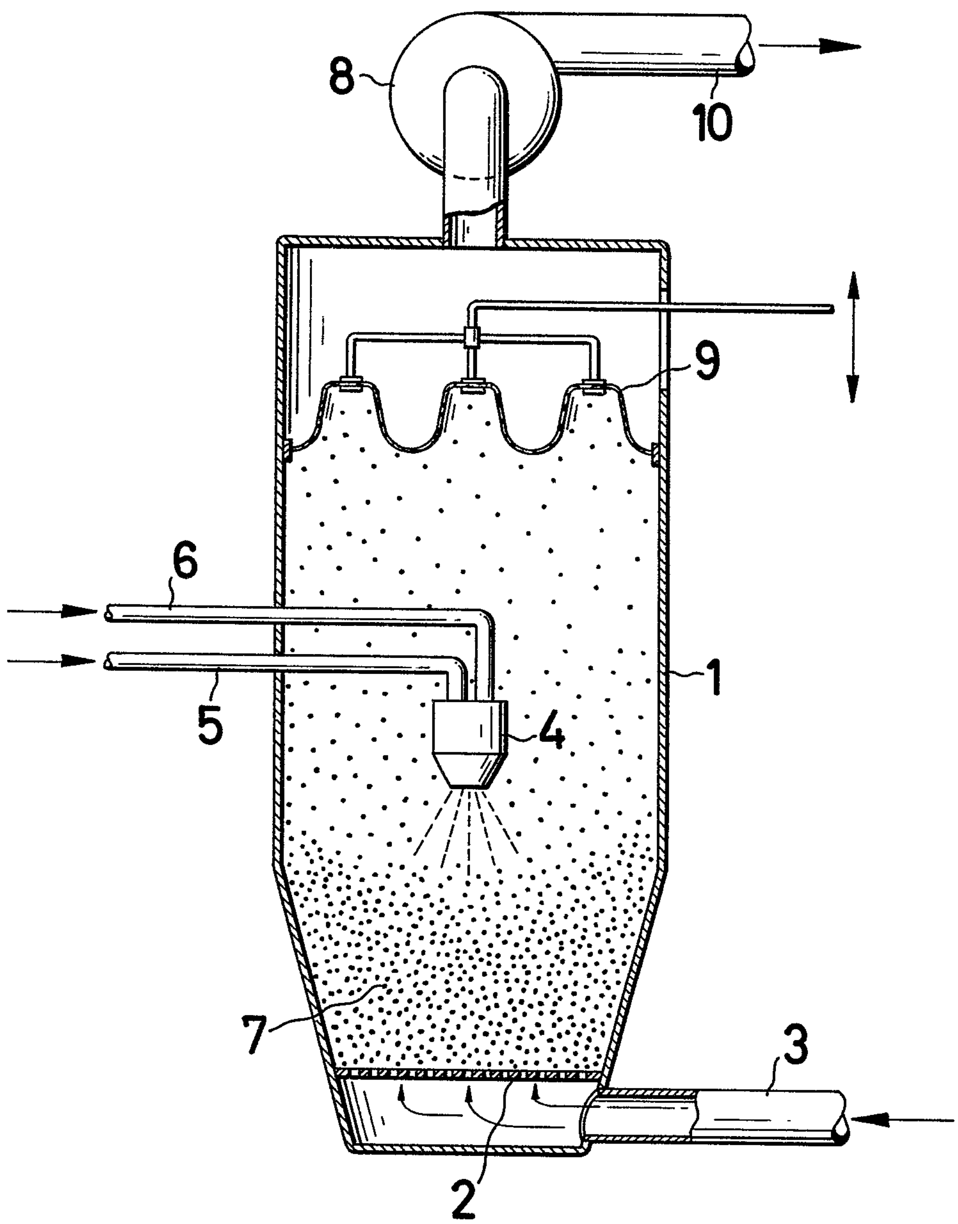
8
10
9
6
5
4
1
7
3
2